Europäisches Patentamt

European Patent Office

Office européen des brevets

(11) Veröffentlichungsnummer: **0 227 905**

**A1**

# (12) EUROPÄISCHE PATENTANMELDUNG

(21) Anmeldenummer: 86114628.0

(51) Int. Cl.⁴ **F16J 15/40**

(22) Anmeldetag: 22.10.86

(30) Priorität: 09.11.85 DE 3539777

(43) Veröffentlichungstag der Anmeldung:
08.07.87 Patentblatt 87/28

(84) Benannte Vertragsstaaten:
DE FR GB IT NL SE

(71) Anmelder: **BASF Aktiengesellschaft**
**Carl-Bosch-Strasse 38**
**D-6700 Ludwigshafen(DE)**

(72) Erfinder: **Ritter, Klaus, Dr.**
**Ulmenstrasse 10**
**D-6945 Hirschberg(DE)**
Erfinder: **Michaelsen, Klaus**
**Deidesheimer Weg 35**
**D-6733 Hassloch(DE)**
Erfinder: **Mair, Gunther, Dr.**
**Corneliusstrasse 15**
**D-6800 Mannheim 25(DE)**

## (54) Wellenabdichtung.

(57) Wellenabdichtung mit magnetischer Flüssigkeit bei Pumpenwellen oder dergleichen, die aus einem die Welle (2) im Abstand umgebenden Permanentmagneten (5) und mindestens einem sich daran anschließenden Polstück (6) besteht. Das Polstück bildet mit der Wellenoberfläche einen Luftspalt (7), in dem die magnetische Flüssigkeit (8) durch die magnetischen Feldkräfte gehalten wird, so daß ein Flüssigkeitsdichtring entsteht. Ein zwischen der magnetischen Flüssigkeitsdichtung (4) und der medienseitigen Wellendurchführung (10) angeordnetes Gasvolumen (11) verhindert, daß die magnetische Flüssigkeit mit dem Medium in Berührung kommt.

EP 0 227 905 A1

## Wellenabdichtung

Die Erfindung betrifft eine Wellenabdichtung mit magnetischer Flüssigkeit bei Pumpenwellen oder dergleichen gemäß Oberbegriff des Patentanspruchs 1.

Magnetische Flüssigkeitsdichtungen die, wie in der US-PS 3 620 584 und in der Europäischen Patentanmeldung 0113694 beschrieben, im wesentlichen aus einem oder mehreren, durch das Magnetfeld zwischen einem Magnetpolring und der Welle gebildeten und gehaltenen Flüssigkeitsringen bestehen, werden dort eingesetzt, wo Wellen gegen unterschiedliche Druckverhältnisse hermetisch abgedichtet werden sollen; beispielsweise bei Wellen von Pumpen, die gefährliche Flüssigkeiten oder Gase fördern. Dichtungsringe aus Gummi oder ähnlichem Material bieten keine Gewähr für ein sicheres Abdichten der Wellen, da durch Material- oder Herstellfehler, insbesondere aber durch Verschleiß Leckstellen auftreten können.

Probleme mit magnetischen Flüssigkeitsdichtungen können dann auftreten, wenn es sich bei dem Fördermedium um aggressive Flüssigkeiten oder Gase handelt, die die magnetische Flüssigkeit zersetzen oder verdünnen.

Es stellte sich daher die Aufgabe, eine Wellenabdichtung mit magnetischer Flüssigkeit der eingangs geschilderten Art zu schaffen, bei der die magnetische Flüssigkeit mit dem Medium nicht in Berührung kommt.

Die Lösung der Aufgabe besteht darin, daß zwischen der magnetischen Flüssigkeitsdichtung und der medienseitigen Wellendurchführung ein die Welle umgebendes Inertgasvolumen angeordnet ist.

Bei großen Druckunterschieden zwischen Medium und Atmosphäre ist es zweckmäßig, entsprechend einer vorteilhaften Ausführungsform der erfindungsgemäßen Wellenabdichtung zwischen dem Inertgasvolumen und der medienseitigen Wellendurchführung eine hydrodynamische Wellenabdichtung vorzusehen.

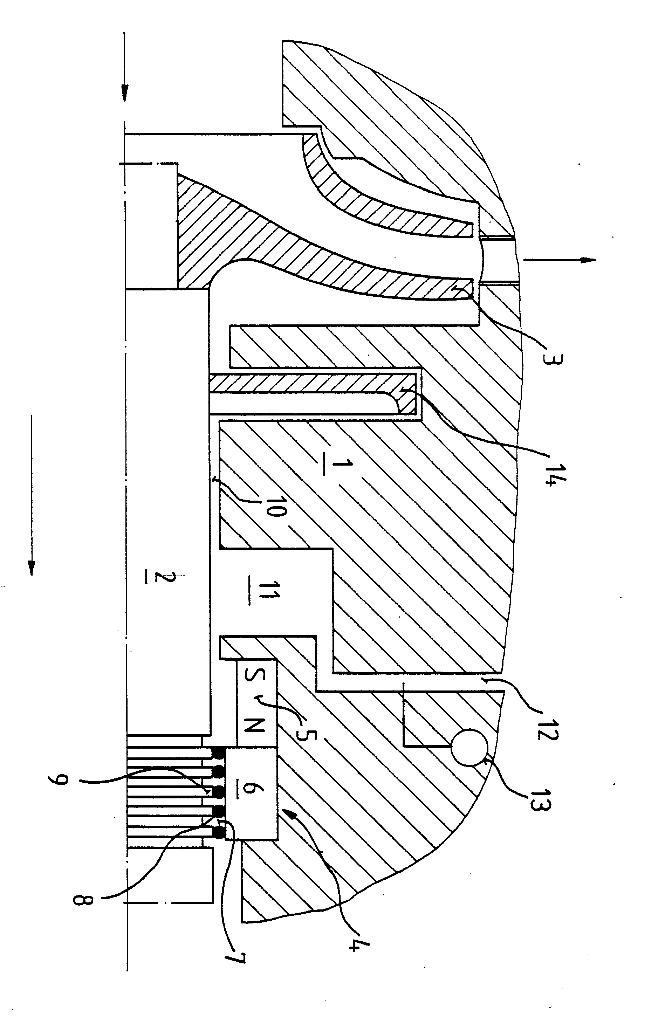

Zur näheren Erläuterung der Wellenabdichtung nach der Erfindung ist nachfolgend anhand der Zeichnung ein Ausführungsbeispiel beschrieben.

In der Zeichnung ist die Wellenabdichtung - schematisch im Längsschnitt gezeigt. Darin ist eine in einem Pumpegehäuse 1 gelagerte Welle 2 mit einem Förderrad 3 und einer magnetischen Flüssigkeitsdichtung 4 zu sehen, die aus einem die Welle im Abstand umgebenden, am Gehäuse befestigten ringförmigen Permanentmagneten 5, einem sich daran anschließenden ebenfalls ringförmigen Polstück 6 und der den magnetischen Kreis - schließenden Welle 2 und Gehäuse 1 besteht. Das Polstück bildet mit der Wellenoberfläche einen Luftspalt 7, in dem die magnetische Flüssigkeit 8 durch die magnetischen Feldkräfte gehalten wird, so daß ein hermetisch abschließender Flüssigkeits-O-ring entsteht.

Durch Zahnung des den Luftspalt 7 begrenzenden Oberflächenabschnitts der Welle 2 und/oder der entsprechenden Polstückfläche entstehen mehrere schmale Ringflächen 9 mit konzentriertem magnetischem Fluß, so daß eine entsprechende Anzahl von getrennten Flüssigkeitsdichtringen gebildet wird. Jeder dieser Ringe hält einer Druckdifferenz von ungefähr 0,2 bar stand. Die gesamte Druckbelastbarkeit entspricht dann der Summe der Flüssigkeitsdichtringe.

Der Ringmanget 5 kann selbstverständlich auch an beiden Polseiten mit jeweils einem Polstück versehen sein, um eine zweifache Flüssigkeitsdichtung zu bilden.

Geeignete magnetische Materialien für den Ringmagneten 5 sind herkömmliche Materialien für Permanentmagnete, wie z.B. magnetischer Stahl, Alnico-Legierungen, hexagonale Ferrite oder Plastoferrite.

Als magnetische Flüssigkeit können handelsübliche Produkte auf Kohlenwasserstofföl-, Esteröl-, Silikonöl-, Perfluoröl-Basis und andere verwendet werden.

Um zu verhindern, daß die magnetische Flüssigkeit mit dem Fördermedium der Pumpe in Berührung kommt, ist zwischen der vorstehend beschriebenen magnetischen Flüssigkeitsdichtung 4 und der förderseitigen Wellendurchführung 10 eine die Welle 2 umgebende Kammer 11 vorgesehen, die mit einem mit der magnetischen Flüssigkeit verträglichen Inertgas gefüllt ist. Das Gas wird über einen Stutzen 12 geführt; der Gasdruck durch ein Manometer 13 überwacht. Ein Durchströmen der Kammer mit dem Inertgas ist erforderlich, wenn Leckageverluste des Inertgases auftreten können.

Bei hohem Pumpendruck ist es zweckmäßig, die Wellendurchführung 10 durch eine hydrodynamische Wellenabdichtung 14 zu entlasten. Ihre Ausführung und Auslegung kann dabei so gewählt werden, daß der Hauptteil des Pumpendrucks von ihr aufgenommen wird. Hydrodynamische Wellenabdichtungen sind in vielfältigen Ausführungsformen aus der Fachliteratur bekannt - (z.B. "Kleines Pumpenhandbuch für Chemie und Technik", Verlag Chemie GmbH, Weinheim, Günter Leuschner, Jahrgang 1967, Seite 55-57), so daß auf deren Beschreibung hier verzichtet werden kann.

**Ansprüche**

1. Wellenabdichtung mit magnetischer Flüssigkeit bei Pumpenwellen oder dergleichen, mit einem die Welle (2) im Abstand umgebenden und im Lagergehäuse (1) der Welle befestigten Permanentmagneten (5) mit mindestens einem Polstück - (6), das mit der Wellenoberfläche einen Luftspalt - (7) bildet, in dem durch das magnetische Feld die magnetische Flüssigkeit (8) gehalten und der dadurch abgedichtet wird, dadurch gekennzeichnet, daß zwischen der magnetischen Flüssigkeitsdichtung (4) und der medienseitigen Wellendurchführung (10) ein die Welle (2) umgebendes Inertgasvolumen (11) angeordnet ist.

2. Wellenabdichtung nach Anspruch 1, dadurch gekennzeichnet, daß der den Luftspalt (7) bildende Oberflächenabschnitt der Welle (2) und/oder des Polstücks (6) mehrfach in Teilflächen (9) unterteilt ist.

3. Wellenabdichtung nach Anspruch 1 und 2, dadurch gekennzeichnet, daß der ringförmige Permanentmagnet (5) an beiden Polen mit jeweils einem, mit der Wellenoberfläche einen Luftspalt (7) bildenden Polstück (6) versehen ist.

4. Wellenabdichtung nach Anspruch 1 bis 3, dadurch gekennzeichnet, daß die medienseitige Wellendurchführung (10) durch eine hydrodynamische Wellenabdichtung (14) entlastet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | GB-A-2 145 169 (U.K. ATOMIC ENERGY AUTHORITY) * Figur 2; Seite 1, Zeilen 109-118; Seite 2, Zeilen 20-23 * | 1 | F 16 J 15/40 |
| A | | 2-3 | |
| | --- | | |
| Y | EP-A-0 094 111 (ALFA ROMEO AUTO S.p.A) * Figur; Seite 6, Zeile 15 - Seite 7, Zeile 8 * | 1 | |
| A | | 4 | |
| | --- | | |
| A | US-A-2 356 011 (L.A. SHELDON) * Figur 1; Seite 1, rechte Spalte, Zeilen 46-50 * | 1 | RECHERCHIERTE SACHGEBIETE (Int. Cl. 4) |
| | --- | | F 16 J |
| A,D | EP-A-0 113 694 (FERROFLUIDICS CO.) * Figur 6; Seite 9, Zeilen 1-24 * | 1-2 | |
| | --- | | |
| A | DE-A-3 207 061 (SIEMENS AG) * Figuren 2-3 * | 1,4 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 18-03-1987 | NARMINIO A. |